# EUROPÄISCHE PATENTSCHRIFT

(11) **EP 2 423 678 B1**
(45) Veröffentlichungstag und Bekanntmachung des Hinweises auf die Patenterteilung: **23.10.2013**
(21) Anmeldenummer: 11177835.3
(22) Anmeldetag: 17.08.2011
(51) Int. Cl.: G01N 27/403, G01N 27/416

(54) **Messvorrichtung und Verfahren zur potentiometrischen Bestimmung elektrischer Messgrößen in Flüssigkeiten**
Measuring device and method for potentiometric determination of electric indicators in liquids
Dispositif de mesure et procédé de détermination potentiométrique de grandeurs de mesure électrique dans des liquides

(30) Priorität: 31.08.2010 DE 102010037259
(43) Veröffentlichungstag der Anmeldung: 29.02.2012
(73) Patentinhaber: Hamilton Bonaduz AG, 7402 Bonaduz (CH)
(72) Erfinder: Schönfuss, Dirk, 7015 Tamins (CH); Louis, Willi, 7402 Bonaduz (CH); Arquint, Philipp, 7402 Bonaduz (CH); Offenbeck, Bernd, 93057 Regensburg (DE)
(74) Vertreter: Caspary, Karsten

(56) Entgegenhaltungen:
- EP-A1- 0 399 101
- EP-A1- 0 497 994
- EP-A1- 1 219 958
- EP-A1- 1 772 729
- EP-A2- 1 248 101

## Beschreibung

Die Erfindung betrifft eine Messvorrichtung zur potentiometrischen Bestimmung elektrischer Messgrößen, zum Beispiel von Ionenkonzentrationen, insbesondere der von Wasserstoff (H⁺)-Ionen bzw. des pH-Werts oder des Redoxpotentials in Flüssigkeiten, mit den im Oberbegriff des Anspruchs 1 angegebenen Merkmalen sowie ein Verfahren zur potentiometrischen Bestimmung elektrochemischer Messgrößen in Flüssigkeiten mit den im Oberbegriff des Anspruchs 10 angegebenen Verfahrensschritten.

Messvorrichtungen zum Bestimmen von Ionenkonzentrationen bzw. des pH-Wertes, der den Wert des negativen dekadischen Logarithmus der Wasserstoffionenkonzentration angibt, oder des Redoxpotentials in Flüssigkeiten sind in der Literatur ausführlich beschrieben. Sie umfassen eine Messelektrode, eine Referenzelektrode und in einigen Fällen eine Bezugselektrode, die jeweils in die Messflüssigkeit eintauchen, und eine mit diesen Elektroden verbundenen Messschaltung. Die Bestimmung des pH-Werts der Messflüssigkeit oder einer anderen Ionenkonzentration oder des Redoxpotentials erfolgt durch Messen der Potentialdifferenz zwischen Mess- und Referenzelektrode, die in der Regel als konzentrisch angeordnete Einstabmesskette ausgeführt ist. Die Impedanzmessung der Mess- und Referenzelektrode erfolgt normalerweise, indem das Signalverhalten von Wechselspannungen, die kapazitiv auf die Referenz- und die Messelektrode angekoppelt und über die Bezugselektrode abgeleitet werden, ausgewertet wird.

Bei den Messvorgängen können sich elektrochemische Störspannungen in Abhängigkeit von der Zusammensetzung der zu vermessenden Flüssigkeit und der für die Bezugselektrode verwendeten Material an der Bezugselektrode einstellen. Außerdem können Störungen zum Beispiel über die Messleitungen eingekoppelt werden.

Verschiedene Ansätze, um Störspannungen zu kompensieren, sind beispielsweise in der EP 1 248 101 B1 oder der EP 1 772 729 B1 beschrieben. Bei den aus diesen Veröffentlichungen bekannten Messvorrichtungen wird der gesuchte Messwert zur Bestimmung der Ionenkonzentration oder des Redoxpotentials aus der Potentialdifferenz zwischen Mess- und Referenzelektrode ermittelt, die jeweils an die nicht invertierenden Eingänge von als Impedanzwandler bzw. Spannungsfolger verschaltete Operationsverstärker hochohmig angeschlossen sind, wobei die Ausgänge der Operationsverstärker auf Eingänge eines Subtrahierers gelegt sind, der aus den an der Referenzelektrode und der Messelektrode gegenüber der Bezugsmasse gemessenen Spannungswerten ein Differenzsignal erzeugt.

Die EP 1 248 101 B1 löst das Problem dass sich zwischen der Bezugselektrode und der Messflüssigkeit ein Störpotential einstellen kann, das dazu führen kann, dass das Potential der Referenz- und/oder der Messelektrode nicht mehr im Eingangsspannungsbereich des Verstärkers liegt, dadurch, dass eine Einstellschaltung vorhanden ist, mit der das Potential der Bezugselektrode in Abhängigkeit vom Störpotential derart eingestellt wird, dass das Potential der Referenzelektrode einen vorgebbaren Wert annimmt. Vorzugsweise wird das Referenzpotential auf einen von der Schaltung einmal vorgegebenen Wert von 0 V fixiert. Bei dieser symmetrischen Beschaltung besteht jedoch das Problem, dass der Versorgungsspannungsbereich der Messschaltung größer als die Summe der möglicherweise auftretenden Spannungswerte insbesondere zwischen Bezugs- und Referenzelektrode sein muss. Bei einer heute üblichen unipolaren Versorgungsspannung von 3 V bedeutet dies eine relativ starke Einschränkung des Messbereichs.

Um die Nachteile einer symmetrischen Beschaltung, wie sie in der EP 1 248 101 B1 gezeigt ist, zu überwinden, beschreibt die EP 1 772 729 B1 eine Schaltung, die es ermöglicht, eine unipolare Versorgungsspannung von 3 V, wie sie für Mikrokontroller gesteuerte Systeme typischerweise vorgesehen ist, derart zu betreiben, dass der Messbereich etwas erweitert werden kann. Darüber hinaus bietet die in der EP 1 772 729 B1 beschriebene Schaltung die Möglichkeit, separate Messungen von Messelektroden- und Referenzelektrodenimpedanz durchzuführen, wodurch eine differenziertere Überwachung und Fehlerausgabe bei Fehlerereignissen, wie zum Beispiel der Beschädigung der Messelektrode oder dem Verstopfen des Diaphragmas der Referenzelektrode, ermöglicht wird. Dazu wird das Potential der Referenzelektrode mittels eines Spannungsteilers hochohmig auf ein fest vorgegebenes Potential geklemmt und die Bezugselektrode rein kapazitiv an ein Bezugspotential angekoppelt. Störspannungen werden damit niederohmig über die Kapazität abgeleitet, d. h. die Spannung an dem entsprechenden Kondensator stellt sich dabei auf die Differenz des Potentials der Bezugselektrode zum Bezugspotential der Messschaltung ein und braucht nicht von der Versorgungsspannung der Messschaltung umfasst zu werden.

Die weitgehende Miniaturisierung elektronischer Schaltungen ermöglicht es seit einiger Zeit, die Messelektronik teilweise oder insgesamt in Sensorköpfen und/oder Steckverbindern zu integrieren, wie es beispielsweise bei den Sensoren des "Memosens"-Systems der Firma Endress & Hauser der Fall ist. Dies hat unter anderem den Vorteil, dass hochohmige, störanfällige Signale nicht über größere Entfernungen via entsprechend geschirmte Kabel zur Messelektronik geleitet werden müssen. Komplizierte Kompensationsschaltungen, die den Einflüssen der Kabel Rechnung trugen, erübrigen sich damit. Die Messelektronik in den Sensoren ist damit auch induktiv galvanisch von der Außenwelt getrennt.

Bei den hier verwendeten Messvorrichtungen möchte man einerseits nicht auf Funktionalitäten wie z. B. die Überwachung der Impedanzen von Mess- und Referenzelektrode verzichten, sondern im Gegenteil möglichst noch weitere Diagnosefunktionen implementieren, um die Betriebssicherheit der Sensoren weiter zu erhöhen. Gleichzeitig ist es aber notwendig, mit immer weniger Energie, d. h. mit geringeren internen Versorgungsspannungen auszukommen, da die in den Sensoren oder Steckverbindern eingebaute Messelektronik aus Sicherheitsgründen möglichst eigensicher sein und z. B. über einen 4-20 mA Anschluss mit maximal 24 V versorgt werden soll. Dies führt zu der Forderung, in der Sensormesselektronik Mikrokontroller zu verwenden, die mit unipolaren Versorgungsspannungen von weniger als 3 V auskommen. Dabei muss jedoch gewährleistet bleiben, dass die Versorgungsspannung größer ist als die Summe der möglicherweise auftretenden Spannungswerte zwischen den einzelnen Elektroden. Des Weiteren ist es für eine weitere Miniaturisierung wünschenswert, mit möglichst geringem Schaltungsaufwand auszukommen.

Die in der EP 1 772 729 B1 beschriebene Schaltung fixiert bei einer unipolaren Versorgungsspannung von 3 V und symmetrischer Spannungsteilung die Referenzelektrode auf einen Wert von 1,5 V und erlaubt somit Messspannungen in einer Bandbreite von ±1,5 V. Dies reicht für pH-Messungen im pH-Bereich von 0 - 14 aus, bedeutet jedoch bereits eine Einschränkung für ein Redoxmesssystem, bei dem regelmäßig ein Messbereich von ±2 V gefordert ist. Mit jeder Verringerung der Versorgungsspannung wird der Messbereich jedoch noch weiter eingeschränkt. Eine mögliche asymmetrische Spannungsteilung erlaubt zwar eine Messbereichserweiterung in eine Spannungsrichtung, jedoch nur auf Kosten des Messbereichs mit entgegen gesetzter Spannungsrichtung. Die Schaltung ist dann nicht mehr universell einsetzbar, denn bei einer Verschiebung des Messbereichs muss die Messschaltung aufwändig umgebaut werden.

Ein weiterer Nachteil der in der EP 1 772 729 B1 beschriebenen Vorrichtung ist, dass bei der Impendanzmessung für eine getrennte Überwachung von Mess- und Referenzelektrode zwei unterschiedliche Rechtecksignale eingekoppelt werden müssen. Dies führt zu einem schaltungstechnisch hohen Aufwand.

Es ist daher die Aufgabe der vorliegenden Erfindung, eine Messvorrichtung und ein entsprechendes Verfahren zur potentiometrischen Bestimmung elektrochemischer Messgrößen in Flüssigkeiten bereitzustellen, die bzw. das einen möglichst großen Messbereich bietet, ohne die Elemente verändern zu müssen, einfach aufgebaut ist, Störpotentiale in der Flüssigkeit berücksichtigt und gleichzeitig mit geringen internen Versorgungsspannungen auskommt.

Diese Aufgabe wird durch den Gegenstand mit den Merkmalen des Anspruchs 1 und des Anspruchs 10 gelöst. Vorteilhafte Ausführungsformen sind in den jeweiligen Unteransprüchen beschrieben.

Erfindungsgemäß weist die Messvorrichtung zur potentiometrischen Bestimmung elektrochemischer Messgrößen in Flüssigkeiten eine jeweils in die Messflüssigkeit eintauchbare Messelektrode, eine Referenzelektrode und eine Bezugselektrode, eine Messschaltung umfassend einen ersten Eingang, der mit der Messelektrode verbunden ist, und einen zweiten Eingang, der mit der Bezugselektrode verbunden ist, wobei die Messschaltung ausgangsseitig ein für die zu messende elektrochemische Messgröße stehendes Signal bereitstellt, und eine Einstellschaltung zum Einstellen des elektrischen Potentials an der Referenzelektrode auf einen vorbestimmten Wert innerhalb des Bereichs der unipolaren Versorgungsspannung auf. Sie zeichnet sich dadurch aus, dass die Referenzelektrode niederohmig mit der Einstellschaltung verbunden ist und die Einstellschaltung dazu eingerichtet ist, das elektrische Potential an der Referenzelektrode variabel während der Messung einzustellen, und dass die Messelektrode sowie die Bezugselektrode jeweils kapazitiv auf die Bezugsmasse gekoppelt sind. Damit ist es möglich, den Messbereich der Vorrichtung zu maximieren und je nach Messgröße anzupassen. Beispielsweise ist damit auch das Messen von negativen Potentialen bei einer unipolaren Versorgungsspannung möglich. Des Weiteren ist eine separate Impedanzmessung jeweils zwischen der Referenzelektrode und den anderen Elektroden durch Einkoppeln lediglich eines Wechselspannungssignals mit einer Modulation möglich.

Bevorzugt ist die Referenzelektrode mit dem Ausgang eines als Impedanzwandler oder Spannungsfolger beschalteten ersten Operationsverstärkers verbunden, dessen nicht invertierender Eingang mit der Einstellschaltung verbunden ist. Mit weiterem Vorteil weist die Einstellschaltung eine variable Spannungsquelle auf. Damit ist das Potential der niederohmig angeschlossenen Referenzelektrode auf ein vorgegebenes, auf die Bezugsmasse der Messschaltung bezogenes Potential auf einfache Weise variabel einstellbar.

Es hat sich des Weiteren als vorteilhaft erwiesen, dass die Messschaltung und die Einstellschaltung als Bestandteile einer Steuereinrichtung ausgebildet sind, die beispielsweise durch einen Mikrokontroller gebildet ist. Mikrokontroller sind Ein-Chip-Computersysteme, die mehrere Peripheriefunktionen beinhalten können, in Massenproduktion hergestellt werden und deshalb preisgünstig zur Verfügung stehen. Vorzugsweise ist der erste Eingang der Messschaltung mit einem zweiten Operationsverstärker verbunden und der zweite Eingang der Messschaltung mit einem dritten Operationsverstärker verbunden, wobei der Ausgang des zweiten Operationsverstärkers über einen ersten A/D-Wandler mit dem Mikrokontroller und der Ausgang des dritten Operationsverstärkers über einen zweiten A/D-Wandler mit dem Mikrokontroller verbunden ist. Die zweiten und dritten Operationsverstärker sind beispielsweise als Impedanzwandler bzw. Spannungsfolger geschaltet, und die Mess- und Bezugselektrode sind jeweils hochohmig an den nicht invertierenden Eingängen angeschlossen. An den A/D-Eingängen des Mikrokontrollers werden die Potentiale von Messelektrode und Bezugselektrode als Spannungen zwischen den Elektroden und der Bezugsmasse erfasst. Die Potentialdifferenz zwischen Mess- und Referenzelektrode kann aus diesen Werten einfach vom Mikrokontroller berechnet werden, weshalb ein zusätzliches Subtrahierelement (wie im Stand der Technik) nicht notwendig ist.

Mit weiterem Vorteil ist der nicht invertierende Eingang des ersten Operationsverstärkers über einen D/A-Wandler mit dem Mikrokontroller verbunden. Da der D/A-Ausgang des Mikrokontrollers niederohmig mit der Referenzelektrode verbunden ist, liegt dort immer das vom Mikrokontroller eingestellte Potential fest an. Insofern ist es nicht notwendig, das Potential der Referenzelektrode tatsächlich durch Messung zu ermitteln. Deshalb können veränderliche Spannungsabfälle zwischen Mess- und Referenzelektrode das Potential der Referenzelektrode nicht beeinflussen. Es hat sich gezeigt, dass die niederohmige Ankopplung der Referenzelektrode unproblematisch ist, da die über die Referenzelektrode fließenden Ströme kleiner als 1 µA sind. Damit ist die erfindungsgemäße Messvorrichtung besonders für Systeme geeignet, die galvanisch von übergeordneten Elementen getrennt sind.

Alternativ ist der nicht invertierende Eingang des ersten Operationsverstärkers über eine Spannungsteilerschaltung mit dem Mikrokontroller verbunden. Dabei kann die Spannungsteilerschaltung eine Mehrzahl von parallel geschalteten Widerständen aufweisen, die mikrokontrollerseitig wechselweise auf die Versorgungsspannung oder die Bezugsmasse schaltbar sind. Dadurch ist das Potential der Referenzelektrode in diskreten Stufen je nach Anzahl und Größe der in die Spannungsteilerschaltung eingebauten Widerstände und je nachdem, ob an dem entsprechenden Widerstand die Versorgungsspannung anliegt, einstellbar, z. B. auf 25 %, 50 % oder 75 % der Versorgungsspannung des Mikrokontrollers. Es ist auch möglich andere Abstufungen auszuwählen. Der Fachmann wird verstehen, welche Werte er den Widerständen der Spannungsteilerschaltung zumessen muss und wie er die Beschaltung im Mikrokontroller programmieren muss, damit eine entsprechende Abstufung entsteht.

Als weitere Alternative weist die Spannungsteilerschaltung mindestens ein digitales Potentiometer auf, dessen Widerstand über den Mikrokontroller einstellbar ist. Diese Variante ist eine Kombination der oben beschriebenen Schaltungsmöglichkeiten, wobei das Potential der Referenzelektrode quasi stufenlos durch den vom Mikrokontroller einstellbaren Wert des digitalen Potentiometers bestimmt wird.

Das erfindungsgemäße Verfahren zur potentiometrischen Bestimmung elektrochemischer Messgrößen in Flüssigkeiten mit der Oben genannten Messvorrichtung weist folgende Schritte auf: a) Eintauchen einer Messelektrode, einer Referenzelektrode und einer Bezugselektrode in eine Flüssigkeit, b) Erfassen des Potentials der jeweils in die Messflüssigkeit eingetauchten Messelektrode und Bezugselektrode in einer Messschaltung, c) Einstellen des Potentials an der Referenzelektrode auf Basis des an der Messelektrode oder der Bezugselektrode erfassten Potentials mittels einer Einstellschaltung und d) Bestimmen der elektrochemischen Messgröße in der Messschaltung.

Dieses Verfahren bietet die Möglichkeit, den Messbereich dynamisch, d. h. auch während der Messung, einstellen zu können.

Mit Vorteil wird Schritt d) automatisch in einer Steuereinrichtung durchgeführt. Die Steuereinrichtung, die zum Beispiel ein Mikrokontroller sein kann, lässt sich so einstellen bzw. programmieren, dass das Potential an der Referenzelektrode derart eingestellt wird, dass der Messbereich für die aktuellen Messgrößen optimal ist.

Die Bestimmung der elektrochemischen Messgrößen in Schritt d) kann die Bestimmung der Ionenkonzentration der Messflüssigkeit, die Bestimmung des Redoxpotentials der Messflüssigkeit oder die Bestimmung der Impedanz der Messelektrode und/oder der Bezugselektrode umfassen. Das erfindungsgemäße Verfahren lässt sich damit verwenden, um eine Mehrzahl von Messgrößen zu erfassen, die jeweils einen unterschiedlichen Messbereich erfordern. Das Verfahren richtet jede Messung demnach automatisch und optimal auf den Wert oder die Werte der zu bestimmenden Messgröße(n) aus.

Bei der Messung der Impedanzen der Messelektrode bzw. der Bezugselektrode wird ein Rechtecksignal auf die Referenzelektrode, beispielsweise mittels Mikrokontroller, aufmoduliert. Damit können unabhängig voneinander mit nur einem eingekoppelten Rechtecksignal die Impedanzwerte von Mess- und Bezugselektrode gemessen werden.

Alternativ kann die Messung der Impedanzen der Messelektrode und der Bezugselektrode auch durch kapazitives Einkoppeln eines Rechtecksignals auf Mess- bzw. Bezugselektrode erfolgen.

Die Erfindung wird nachfolgend unter Bezugnahme auf die in den Zeichnungen dargestellten Figuren ausführlich beschrieben, in denen:
- Fig. 1: ein schematisches Schaltbild einer bevorzugten Ausführungsform einer erfin-dungsgemäßen Messvorrichtung zeigt;
- Fig. 2: ein schematisches Schaltbild einer zweiten Ausführungsform der erfindungsgemäßen Messvorrichtung zeigt;
- Fig. 3: ein schematisches Schaltbild einer weiteren Ausführungsform der erfindungsgemäßen Messvorrichtung zeigt, und
- Fig. 4: ein schematisches Schaltbild einer weiteren Ausführungsform der erfindungsgemäßen Messvorrichtung zeigt.

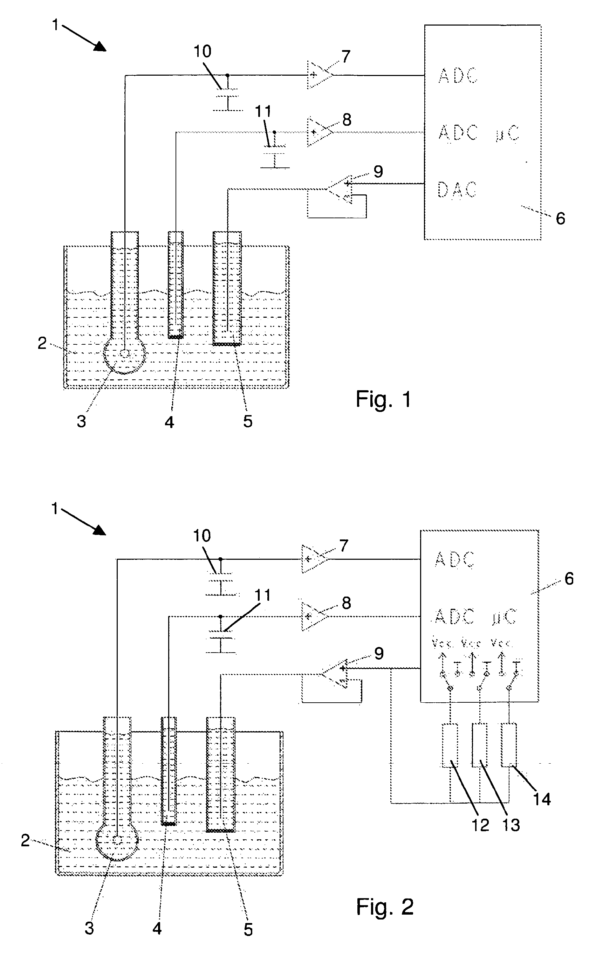

Fig. 1 zeigt ein schematisches Schaltbild einer Ausführungsform der erfindungsgemäßen Messvorrichtung 1. In einem Gefäß befindet sich eine Messflüssigkeit 2, deren elektrochemische Kenngrößen, wie z. B. die Wasserstoffionenkonzentration oder das Redoxpotential zu bestimmen sind. In die Messflüssigkeit 2 eingetaucht ist eine Messelektrode 3, die beispielsweise zur Bestimmung des pH-Werts eine für Wasserstoffionen sensitive und selektive, hochohmige Glaselektrode sein kann, die im Wesentlichen aus einem pH-sensitiven Glaskörper, einem Innenpuffer und einem Ableitelektrodensystem besteht. Zur Bestimmung des Redoxpotentials der Messflüssigkeit 2 besteht die Messelektrode 3 in der Regel aus Platin oder Gold und ist niederohmig.

Ebenfalls in die Messflüssigkeit 2 eingetaucht ist die Bezugselektrode 4, die beispielsweise aus Edelstahl, Tantal, Gold oder Platin bestehen kann. Schließlich ist in die Messflüssigkeit 2 auch eine Referenzelektrode 5 eingetaucht, die üblicherweise als nicht selektive Redoxelektrode ausgebildet ist und im Wesentlichen aus einer Metall-/Metallsalz-Elektrode besteht, die in einen Referenzelektrolyten mit einer definierten Konzentration des Anions des in der Regel schwer löslichen Metallsalzes des Elektrodensystems eingetaucht ist. Referenzelektrodensysteme können unter anderem zur Stabilisierung des Potentials komplizierter aufgebaut und mit speziellen Patronen ausgerüstet sein. Die Konzentration dieses Anions ist potentialbestimmend für die Referenzelektrode. Der Referenzelektrolyt und die Referenzelektrode befinden sich darum in einem gesonderten Gefäß und sind über eine möglichst kleine Öffnung oder ein Diaphragma in der Gefäßwand mit dem Messgut verbunden. Die Öffnung oder das Diaphragma ist so gestaltet, dass der Ausfluss des Referenzelektrolyten und das Eindringen des Messgutes, in das den Referenzelektroden enthaltene Gefäß möglichst gering ist, damit die Konzentration des jeweiligen potentialbestimmenden Ions und damit das Potential der Referenzelektrode möglichst konstant bleiben. Das meist verwendete Referenzelektrodensystem stellt die Silber-/Silberchloridelektrode dar. Das Potential der Silber-/Silberchloridelektrode hängt von der Chloridionenkonzentration, die häufig 3-molar ist, im Referenzelektrolyten ab. Bei anderen Referenzsystemen können die Konzentrationen anderer Ionen potentialbestimmend sein.

Die Messelektrode 3 und die Bezugselektrode 5 sind kapazitiv über die Kondensatoren 10 bzw. 11 an ein Bezugspotential gekoppelt. Des Weiteren sind die Messelektrode 3 und die Bezugselektrode 4 jeweils hochohmig an die nicht invertierenden Eingänge von Operationsverstärkern 7 bzw. 8 angeschlossen, die als Impedanzwandler bzw. Spannungsfolger verschaltet sein können. Die Ausgänge der Operationsverstärker 7 und 8 sind jeweils mit einem A/D-Wandlereingang eines Mikrokontrollers 6 verbunden.

Die Referenzelektrode 5 ist niederohmig an einen Ausgang eines als Spannungsfolger oder Impedanzwandler verschalteten Operationsverstärker 9 angeschlossen, dessen einer Eingang - in dem dargestellten Beispiel der nicht invertierende Eingang - an einen D/A-Wandlerausgang des Mikrokontrollers 6 angeschlossen ist. Der Mikrokontroller und der Operationsverstärker 9 bilden eine Einstellschaltung, über welche die Referenzelektrode 5 niederohmig auf ein durch den Mikrokontroller 6 am Ausgang des D/A-Wandlers vorgegebenes Potential gelegt werden kann.

Es ist ein wesentlicher Aspekt der Erfindung, dass sich das Potential der Referenzelektrode 5 jederzeit, d. h. auch während einer Messung, auf Potentialwerte innerhalb des Versorgungsspannungsbereichs dynamisch und unabhängig vom Potential der Bezugselektrode 4 einstellen lässt, ohne dass die gesamte Messvorrichtung 1 dafür verändert werden muss. Die Einstellschaltung übernimmt damit die entscheidende Funktion bei der Festlegung des Messbereichs der erfindungsgemäßen Messvorrichtung 1.

Der gesuchte Messwert zur Bestimmung der Ionenkonzentration oder des Redoxpotentials wird aus der Potentialdifferenz zwischen den Potentialen der Messelektrode 3 und der Referenzelektrode 5 ermittelt, wobei es nicht notwendig ist, das Potential der Referenzelektrode 5 tatsächlich durch eine Messung zu ermitteln, weil dem Mikrokontroller 6 der Messvorrichtung 1 bekannt ist, welches Potential an seinem D/A-Ausgang ausgegeben wird. Weiterhin wird durch die niederohmige Anbindung der Referenzelektrode 5 sichergestellt, dass diese tatsächlich auf das eingestellte Potential fixiert ist. Damit können veränderliche Spannungsabfälle zwischen Messelektrode 3 und Referenzelektrode 5 das Potential der Referenzelektrode 5 nicht beeinflussen. Die über die Referenzelektrode 5 fließenden Ströme sind kleiner als 1 pA, die niederohmige Ankopplung der Referenzelektrode 5 ist deshalb im Hinblick auf Verlustleistungen unkritisch.

An den A/D-Eingängen des Mikrokontrollers 6 werden die Potentiale der Messelektrode 3 und der Bezugselektrode 4 als Spannungen zwischen den Potentialen an den Elektroden und Bezugspotential erfasst. Die Potentialdifferenz zwischen der Messelektrode 3 und der Referenzelektrode 5 kann durch den Mikrokontroller einfach aus diesen Werten berechnet werden. Ein Subtrahierer als eigenständiges Bauelement ist dazu nicht mehr notwendig.

Mit der erfindungsgemäßen Messvorrichtung kann gemäß dem erfindungsgemäßen Messverfahren auch eine separate Impedanzmessung der auf die Bezugsmasse gekoppelten Messelektrode 3 und der Referenzelektrode 5 durchgeführt werden. Dazu werden kleine Rechteckwechselspannungen, z. B. in Höhe von 0,2 V, direkt auf das Potential der Referenzelektrode 5 aufmoduliert. Die Erzeugung dieses Rechteckimpulses kann direkt mittels des D/A-Wandlers des Mikrokontrollers 6 erfolgen. Das Rechtecksignal lädt nun über den Widerstand der Messelektrode 3, im Falle einer pH-Elektrode über den pH-Glaswiderstand, den Kondensator 10 um, über den die Messelektrode 3 an Bezugspotential gekoppelt ist. Gleichzeitig wird der Kondensator 11, über den die Bezugselektrode 4 an Bezugspotential gekoppelt ist, durch das Rechtecksignal über die Widerstände der Referenzelektrode 5, den des Elektrolyten zwischen Referenzelektrode und Bezugselektrode 4 und im Falle, dass sich die Bezugselektrode 5 außerhalb des Gefäßes für den Referenzelektrolyten befindet, über ein gegebenenfalls vorhandenes Diaphragma umgeladen. Anhand der über die A/D-Wandler des Mikrokontrollers 6 fast zeitgleich gemessenen Ladekurven der Kondensatoren 10, 11 können die Impedanzen separat bestimmt werden. Dabei ist für alle Impedanzmessungen nur ein Rechtecksignal erforderlich.

Eventuell in der Messflüssigkeit 2 auftretende Störpotentiale werden über den Kondensator 11 an der Bezugselektrode 4 und/oder über die niederohmige Referenzelektrode 5 abgeleitet.

Da durch den Mikrokontroller 6 neben dem Potential der Messelektrode 3 auch das Potential der Bezugselektrode 4 bezogen auf das Referenzpotential erfasst wird, kann die Potentialdifferenz zwischen Bezugselektrode 4 und Referenzelektrode 5 vom Mikrokontroller 6 ebenfalls berechnet werden. Diese Spannung repräsentiert, wenn das Material der Bezugselektrode 4 z. B. Platin ist und sich die Bezugselektrode 4 direkt in der Messflüssigkeit 2 befindet, das Redoxpotential der Messflüssigkeit 2 wieder.

Die erfindungsgemäße Messvorrichtung 1 kann auch mit kleineren Spannungen versorgt werden, da es möglich ist, mit Hilfe des Mikrokontrollers 6 das Potential der Referenzelektrode 5 nach Bedarf automatisch durch Festigung von Grenzwerten zu ändern, um auf diese Weise den Messbereich der entsprechenden A/D-Wandler und Operationsverstärker einzuhalten. Wird also ein festgelegter Grenzwert bei einer Messung überschritten, so stellt der Mikrokontroller 6 über die Einstellschaltung das Potential der Referenzelektrode 5 derart ein, dass der Messwert nunmehr innerhalb des neu eingestellten Messbereichs liegt.

Fig. 2 zeigt eine weitere Ausführungsform der erfindungsgemäßen Messschaltung, die sich von der in Fig. 1 dargestellten dadurch unterscheidet, dass das Potential der Referenzelektrode 5 nicht direkt durch den Mikrokontroller 6, sondern indirekt über eine Spannungsteilerschaltung eingestellt wird. Diese Spannungsteilerschaltung umfasst bei der dargestellten Ausführungsform mehrere Widerstände 12, 13 und 14, die mit jeweils einem Eingang des Mikrokontrollers 6 verbunden sind, wobei diese Eingänge durch den Mikrokontroller entweder an einen Anschluss für eine Versorgungsspannung Vcc oder an einen Anschluss für Bezugspotential angeschlossen werden können. Je nach Beschaltung ergibt sich dadurch ein Potential an der Referenzelektrode 5, das zwischen 0 und der Versorgungsspannung Vcc liegt. Auch hier gilt, dass das durch die Spannungsteilerschaltung eingestellte Potential direkt an der Referenzelektrode 5 anliegt, da diese niederohmig angebunden ist. Auf eine detaillierte Beschreibung der Möglichkeiten, wie man die drei Widerstände 12, 13 und 14 dimensionieren muss, damit entsprechende Spannungswerte eingestellt werden, wird verzichtet, weil davon ausgegangen wird, dass dies dem Fachmann geläufig ist.

Mit der in Fig. 2 dargestellten Schaltung lässt sich auch ein Rechteckimpuls zur Messung der Impedanzen von Messelektrode 3 und Bezugselektrode 4 einkoppeln. Dabei wird das Rechtecksignal durch geeignetes Zu- und Abschalten der entsprechend dimensionierten Widerstände 12, 13 und 14 im Mikrokontroller 6 erzeugt.

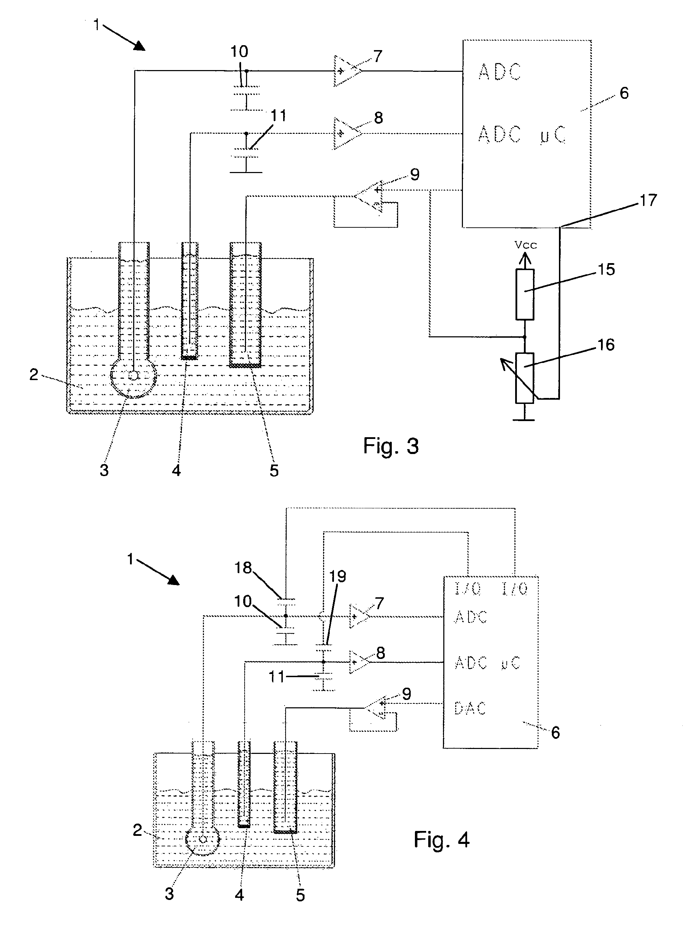

Als Alternative zu der in Fig. 2 dargestellten Spannungsteilerschaltung ist in Fig. 3 eine schematische Schaltung der Einstellschaltung dargestellt, die auf dem gleichen Prinzip beruht, jedoch ein digitales Potentiometer 16 nutzt, dessen Wert durch einen digitalen Ausgang 17 des Mikrokontrollers 6 eingestellt werden kann. Die Spannungsteilerschaltung weist des Weiteren den Widerstand 15 auf, der an die Versorgungsspannung Vcc angeschlossen ist. Mit dieser Spannungsteilerschaltung kann im Wesentlichen stufenlos das Potential der Referenzelektrode 5 eingestellt werden, das auch hier zwischen 0 V und dem maximalen Versorgungspannungswert Vcc liegt.

Fig. 4 zeigt ein schematisches Schaltbild einer weiteren Ausführungsform der erfindungsgemäßen Messvorrichtung. In Abwandlung der bevorzugten Ausführungsform aus Fig. 1 ist hier der Mikrokontroller 6 über jeweils einen digitalen Ausgang und die Kondensatoren 18 bzw. 19 mit der Messelektrode 3 und der Bezugselektrode 4 verbunden. Mit dieser zusätzlichen Einkoppelschaltung ist es bei der Impedanzmessung der Messelektrode 3 und der Bezugselektrode 4 möglich, Rechteckimpulse aus dem Mikrokontroller 6 heraus separat zu erzeugen und kapazitiv auf die beiden Elektroden zu koppeln. Die Ableitung des Rechteckimpulses erfolgt über die niederohmige Referenzelektrode 5. Anhand der über die A/D-Wandler des Mikrokontrollers 6 gemessenen Ladekurven können dann die Impedanzen bestimmt werden. Es ist auch möglich, die Einkoppelschaltung aus Fig. 4 mit den Ausführungsformen aus Fig. 2 oder Fig. 3 zu kombinieren.

Nachfolgend sollen anhand eines Beispieles die Vorteile der erfindungsgemäßen Messvorrichtung und des erfindungsgemäßen Verfahrens näher erläutert werden. Es wird eine Schaltungsanordnung gemäß der bevorzugten Ausführungsform aus Fig. 1 gewählt. Dabei ist die Messelektrode 3 eine pH-Glaselektrode, die Referenzelektrode 5 eine Silber-/Silberchloridelektrode mit 3-molarer KCI-Lösung als Referenzelektrolyt. Die Glaselektrode hat einen Innenelektrolyten mit einem definierten pH-Wert und einer definierten Chloridionenkonzentration und ihre Ableitung ist eine Silber/Silberchloridelektrode. Die Messspannung zwischen Referenzelektrode 5 und Glaselektrode beträgt dann in einer Flüssigkeit bei einem pH-Wert von 7 genau 0 mV. Die Abhängigkeit der Messspannung vom pH-Wert beträgt 59,16 mV/pH bei 25°C. Das Referenzpotential wird mittels A/D-Wandlern zunächst auf 1,25 V bei einer Versorgungsspannung von 2,5 V festgelegt. Damit ist der Messbereich für die Messvorrichtung 1 unter Berücksichtigung der Modulationsspannung von ca. ±0,2 V auf ±1 V festgelegt. Die Bezugselektrode ist eine Platinelektrode, die direkt in die zu vermessende Flüssigkeit 2 eintaucht. Die zu vermessende Messflüssigkeit 2 hat einen pH-Wert von 1 und ein Redoxpotential von +1,6 V vs. Silber/Silberchlorid-3M KCl.

Während der pH-Wert mit einer Spannung von 355 mV (= 6 x 59,16 mV) von der erfindungsgemäßen Messvorrichtung korrekt erfasst werden kann, gilt dies für das Redoxpotential der Messflüssigkeit 2 zunächst nicht, weil +1,6 V außerhalb des Messbereichs von ±1 V liegt.

Der Mikrokontroller 6 kann nun so programmiert werden, dass er die Messwerte der Bezugselektrode 4 und/oder der Messelektrode 3 erst dann an eine übergeorderte Einheit, z. B. eine Anzeige, weiterleitet, wenn sichergestellt ist, dass der jeweilige Messwert noch innerhalb des gültigen Messbereiches ist.

Da der Wert der Bezugselektrode 4 im gewählten Beispiel den aktuellen Messbereich von maximal 1 V überschreiten und das Signal der Bezugselektrode 4 das mit der gewählten Einstellung mögliche Maximum beträgt, setzt der Mikrokontroller 6 das Potential der Referenzelektrode 5 automatisch stufenweise bis zu einem Wert herab, bei dem der Messwert wieder innerhalb des dann gültigen Messbereichs liegt, z. B. um 0,5 V. Der gültige Messbereich liegt nun zwischen -0,25 V und +1,75 V, in dem sowohl der aktuelle pH-Wert als auch das Redoxpotential korrekt erfasst werden.

Eine Änderung des pH-Werts oder des Redoxpotentials der zu vermessenden Flüssigkeit, die über den nun aktuellen Messbereich wieder hinausgeht, lässt sich auf dieselbe Art und Weise wieder kompensieren. Dieser Vorgang kann, falls notwendig, bei jeder Messung eines Elektrodenpotentials erneut erfolgen, auch in die Gegenrichtung, z. B. wenn bei einem pH-Wert von 1 (U_{pH} = +355 mV; eingestelltes Referenzpotential bei der pH-Messung z. B. 0,5 V) ein Redoxpotential von -1,8 V erfasst werden müsste. Dies beinhaltet die Umstellung des Referenzpotentials für die Messung des Redoxpotentials auf +1,9 V.

Auf diese Weise lassen sich auch noch mit kleineren Versorgungsspannungen nutzbare Messbereiche realisieren.

Die erfindungsgemäße Messvorrichtung bietet somit den Vorteil, dass sie für verschiedene Elektrodentypen mit symmetrischer Messbereichsaufteilung, wie sie zum Beispiel eine pH-oder Redoxelektrode darstellen (Potentialbereich ±400 mV bzw. ±2 V), als auch für Sensoren mit einem unsymmetrischen Messbereich eignet, wie in zum Beispiel andere ionenselektive Elektroden aufweisen können.

Mit der vorliegenden Erfindung wurde eine Messvorrichtung und ein entsprechendes Verfahren zur potentiometrischen Bestimmung elektrochemischer Messgrößen in Flüssigkeiten bereitgestellt, die bzw. das einen möglichst großen Messbereich bietet, ohne die Schaltungselemente explizit verändern zu müssen, die einfach aufgebaut ist, Störpotentiale in der Flüssigkeit berücksichtig und gleichzeitig mit geringeren internen Versorgungsspannungen auskommt.

## Patentansprüche

1. Messvorrichtung (1) zur potentiometrischen Bestimmung elektrochemischer Messgrößen in Flüssigkeiten mit
einer jeweils in die Messflüssigkeit (2) eintauchbaren Messelektrode (3), einer Referenzelektrode (5) und einer Bezugselektrode (4),
einer Messschaltung umfassend einen ersten Eingang, der mit der Messelektrode (3) verbunden ist, und einen zweiten Eingang, der mit der Bezugselektrode (4) verbunden ist, wobei die Messschaltung ausgangsseitig ein für die zu messende elektrochemische Messgröße stehendes Signal bereitstellt, und
einer Einstellschaltung zum Einstellen des elektrischen Potentials an der Referenzelektrode (5) auf einen vorbestimmten Wert innerhalb des Bereichs der unipolaren Versorgungsspannung
**dadurch gekennzeichnet, dass**
die Referenzelektrode (5) niederohmig mit der Einstellschaltung verbunden ist und die Einstellschaltung dazu eingerichtet ist, das elektrische Potential an der Referenzelektrode (5) variabel während der Messung einzustellen, und
dass die Messelektrode (3) sowie die Bezugselektrode (4) jeweils kapazitiv auf die Bezugsmasse gekoppelt sind.

2. Messvorrichtung (1) nach Anspruch 1, **dadurch gekennzeichnet, dass** die Referenzelektrode mit dem Ausgang eines als Impedanzwandler oder Spannungsfolger beschalteten ersten Operationsverstärkers (9) verbunden ist, dessen nicht invertierender Eingang mit der Einstellschaltung verbunden ist.

3. Messvorrichtung (1) nach Anspruch 1 oder 2, **dadurch gekennzeichnet, dass** die Einstellschaltung eine variable Spannungsquelle aufweist.

4. Messvorrichtung (1) nach einem der vorhergehenden Ansprüche, **dadurch gekennzeichnet, dass** die Messschaltung und die Einstellschaltung als Bestandteil einer Steuereinrichtung (6) ausgebildet sind.

5. Messvorrichtung (1) nach Anspruch 4, **dadurch gekennzeichnet, dass** die Steuereinrichtung als Mikrocontroller (6) ausgebildet ist, dass der erste Eingang der Messschaltung mit einem zweiten Operationsverstärkers (7) verbunden ist, und dass der zweite Eingang der Messschaltung mit einem dritten Operationsverstärkers (8) verbunden ist, wobei der Ausgang des zweiten Operationsverstärkers (7) über einen ersten A/D-Wandler mit dem Mikrocontroller (6) und der Ausgang des dritten Operationsverstärkers (8) über einen zweiten A/D-Wandler mit dem Mikrocontroller (6) verbunden ist.

6. Messvorrichtung (1) nach Anspruch 5, **dadurch gekennzeichnet, dass** der nicht invertierende Eingang des ersten Operationsverstärkers (9) über einen D/A-Wandler mit dem Mikrocontroller (6) verbunden ist.

7. Messvorrichtung (1) nach Anspruch 5, **dadurch gekennzeichnet, dass** der nicht invertierende Eingang des ersten Operationsverstärkers (9) über eine Spannungsteilerschaltung mit dem Mikrocontroller (6) verbunden ist.

8. Messvorrichtung (1) nach Anspruch 7, **dadurch gekennzeichnet, dass** die Spannungsteilerschaltung eine Mehrzahl von parallel geschalteten Widerständen (12, 13, 14) aufweist, die mikrocontrollerseitig wechselweise auf die Versorgungsspannung oder die Bezugsmasse schaltbar sind.

9. Messvorrichtung (1) nach Anspruch 7, **dadurch gekennzeichnet, dass** die Spannungsteilerschaltung mindestens ein digitales Potentiometer (16) aufweist, dessen Widerstand über den Mikrocontroller (6) einstellbar ist.

10. Verfahren zur potentiometrischen Bestimmung elektrochemischer Messgrößen in Flüssigkeiten mit einer Messvorrichtung nach einem der vorhergehenden Ansprüche mit folgenden Schritten:
a) Eintauchen einer Messelektrode (3), einer Referenzelektrode (5) und einer Bezugselektrode (4) in eine Messflüssigkeit (2),
b) Erfassen des Potentials der jeweils in die Messflüssigkeit (2) eingetauchten Messelektrode (3) und Bezugselektrode (4) in einer Messschaltung,
c) Einstellen des Potentials an der Referenzelektrode (5) auf Basis des an der Messelektrode (3) oder der Bezugselektrode (4) erfassten Potentials mittels einer Einstellschaltung, und
d) Bestimmen der elektrochemischen Messgröße in der Messschaltung.

11. Verfahren nach Anspruch 10, **dadurch gekennzeichnet, dass** Schritt d) automatisch in einer Steuereinrichtung (6) durchgeführt wird.

12. Verfahren nach Anspruch 10 oder 11, **dadurch gekennzeichnet, dass** Schritt d) die Bestimmung der Ionenkonzentration der Messflüssigkeit (2), des Redoxpotentials der Messflüssigkeit (2) oder der Impedanz der Messelektrode (3) und/oder der Bezugselektrode (4) umfasst.

13. Verfahren nach Anspruch 12, **dadurch gekennzeichnet, dass** die Messung der Impedanzen der Messelektrode (3) und der Bezugselektrode (4) durch Aufmodulieren eines Rechtecksignals auf die Referenzelektrode (5) erfolgt.

14. Verfahren nach Anspruch 12, **dadurch gekennzeichnet, dass** die Messung der Impedanzen der Messelektrode (3) und der Bezugselektrode (4) durch kapazitives Einkoppeln eines Rechtecksignals auf Messelektrode (3) und Bezugselektrode (4) erfolgt.

## Claims

1. Measuring device (1) for the potentiometric determination of electro-chemical indicators in liquids with
a measuring electrode (3) which can be dipped in each measuring liquid (2), a reference electrode (5) and a counter electrode (4),
a measuring circuit, comprising a first input which is connected to the measuring electrode (3), and a second input which is connected to the counter electrode (4), wherein the measuring circuit provides on the output side a signal standing for the electro-chemical indicator which is to be measured, and
a regulating circuit for regulating the electric potential at the reference electrode (5) to a predetermined value within the range of the unipolar supply voltage,
**characterised in that** the reference electrode (5) is connected low-resistive to the regulating circuit, and the regulating circuit is set up to regulate the electric potential at the reference electrode (5) variably during the measuring, and that the measuring electrode (3) as well as the counter electrode (4) are each coupled capacitively to the reference mass.

2. Measuring device (1) according to claim 1 **characterised in that** the reference electrode is connected to the output of a first operations amplifier (9) connected in as an impedance converter or voltage follower and whose non-inverting input is connected to the regulating circuit.

3. Measuring device (1) according to claim 1 or 2 **characterised in that** the regulating circuit has a variable voltage source.

4. Measuring device (1) according to one of the preceding claims **characterised in that** the measuring circuit and the regulating circuit are formed as a constituent part of a control device (6).

5. Measuring device (1) according to claim 4 **characterised in that** the control device is formed as a microcontroller (6), that the first input of the measuring circuit is connected to a second operations amplifier (7), and that the second input of the measuring circuit is connected to a third operations amplifier (8), wherein the output of the second operations amplifier (7) is connected via a first A/D converter to the microcontroller (6) and the output of the third operations amplifier (8) is connected via second A/D converter to the microcontroller (6).

6. Measuring device (1) according to claim 5 **characterised in that** the non-inverting input of the first operations amplifier (9) is connected to the microcontroller (6) via a D/A converter.

7. Measuring device (1) according to claim 5 **characterised in that** the non-inverting input of the first operations amplifier (9) is connected to the microcontroller (6) via a voltage divider circuit.

8. Measuring device (1) according to claim 7 **characterised in that** the voltage divider circuit has a number of resistors (12, 13, 14) connected in parallel which can be switched on the microcontroller side optionally to the supply voltage or the reference mass.

9. Measuring device (1) according to claim 7 **characterised in that** the voltage divider circuit has at least one digital potentiometer (16) whose resistor is adjustable via the microcontroller (6).

10. Method for the potentiometric determination of electro-chemical indicators in liquids with a measuring device according to one of the preceding claims with the following steps
a) Dipping a measuring electrode (3), a reference electrode (5) and a counter electrode (4) into a measuring liquid (2),
b) Identifying the potential of the measuring electrode (3) and counter electrode (4) dipped in the measuring liquid (2) in a measuring circuit,
c) Regulating by means of a regulating circuit the potential at the reference electrode (5) on the basis of the potential determined at the measuring electrode (3) or the counter electrode (4), and
d) Determining the electro-chemical indicator in the measuring circuit.

11. Method according to claim 10 **characterised in that** the step d) is carried out automatically in a control device (6).

12. Method according to claim 10 or 11 **characterised in that** the step d) comprises the determination of the ion concentration of the measuring liquid (2), the redox potential of the measuring liquid (2) or the impedance of the measuring electrode (3) and/or the counter electrode (4).

13. Method according to claim 12 **characterised in that** the measuring of the impedance of the measuring electrode (3) and the counter electrode (4) is carried out by modulating up the rectangular signal to the reference electrode (5).

14. Method according to claim 12 **characterised in that** the measuring of the impedances of the measuring electrode (3) and the counter electrode (4) is carried out through capacitive coupling of a rectangular signal to the measuring electrode (3) and counter electrode (4).

## Revendications

1. Dispositif de mesure (1) pour la détermination potentiométrique de grandeurs de mesure électrochimiques dans des liquides, comprenant
une électrode de mesure (3), une électrode de référence (5) et une électrode de comparaison (4), qui peuvent être chacune plongées dans le liquide de mesure (2),
un circuit de mesure comportant une première entrée, reliée à l'électrode de mesure (3), et une seconde entrée, reliée à l'électrode de comparaison (4), le circuit de mesure fournissant du côté sortie un signal pour la grandeur de mesure électrochimique à mesurer, et
un circuit de réglage pour régler le potentiel électrique aux bornes de l'électrode de référence (5) à une valeur prédéfinie à l'intérieur de la plage de la tension d'alimentation unipolaire,
**caractérisé en ce que**
l'électrode de référence (5) est en liaison à basse valeur ohmique avec le circuit de réglage et le circuit de réglage est conçu pour un réglage variable, pendant la mesure, du potentiel électrique aux bornes de l'électrode de référence (5), et
que l'électrode de mesure (3), ainsi que l'électrode de comparaison (4), sont chacune en couplage capacitif à la masse de référence.

2. Dispositif de mesure (1) selon la revendication 1, **caractérisé en ce que** l'électrode de référence est reliée à la sortie d'un premier amplificateur opérationnel (9) câblé en tant qu'adaptateur d'impédance ou de suiveur de tension, dont l'entrée non inverseuse est reliée au circuit de réglage.

3. Dispositif de mesure (1) selon l'une des revendications 1 et 2, **caractérisé en ce que** le circuit de réglage présente une source de tension variable.

4. Dispositif de mesure (1) selon l'une des revendications précédentes, **caractérisé en ce que** le circuit de mesure et le circuit de réglage sont réalisés en tant que composant d'un dispositif de commande (6).

5. Dispositif de mesure (1) selon la revendication 4, **caractérisé en ce que** le dispositif de commande est réalisé sous forme de microcontrôleur (6), que la première entrée du circuit de mesure est reliée à un deuxième amplificateur opérationnel (7), et que la seconde entrée du circuit de mesure est reliée à un troisième amplificateur opérationnel (8), la sortie du deuxième amplificateur opérationnel (7) étant reliée au microcontrôleur (6) à travers un premier convertisseur A/D et la sortie du troisième amplificateur opérationnel (8) étant reliée au microcontrôleur (6) à travers un second convertisseur A/D.

6. Dispositif de mesure (1) selon la revendication 5, **caractérisé en ce que** l'entrée non inverseuse du premier amplificateur opérationnel (9) est reliée au microcontrôleur (6) à travers un convertisseur D/A.

7. Dispositif de mesure (1) selon la revendication 5, **caractérisé en ce que** l'entrée non inverseuse du premier amplificateur opérationnel (9) est reliée au microcontrôleur (6) à travers un circuit diviseur de tension.

8. Dispositif de mesure (1) selon la revendication 7, **caractérisé en ce que** le circuit diviseur de tension présente une pluralité de résistances (12, 13, 14) montées en parallèle, qui sont commutables en alternance, du côté microcontrôleur, sur la tension d'alimentation ou sur la masse de référence.

9. Dispositif de mesure (1) selon la revendication 7, **caractérisé en ce que** le circuit diviseur de tension présente au moins un potentiomètre numérique (16), dont la résistance est réglable à travers le microcontrôleur (6).

10. Procédé de détermination potentiométrique de grandeurs de mesure électrochimiques dans des liquides avec un dispositif de mesure selon l'une des revendications précédentes, comprenant les étapes suivantes :
a) immersion d'une électrode de mesure (3), d'une électrode de référence (5) et d'une électrode de comparaison (4) dans un liquide de mesure (2),
b) détection du potentiel de l'électrode de mesure (3) et de l'électrode de comparaison (4), immergées chacune dans le liquide de mesure (2), dans un circuit de mesure,
c) réglage du potentiel aux bornes de l'électrode de référence (5), sur la base du potentiel détecté aux bornes de l'électrode de mesure (3) ou de l'électrode de comparaison (4), au moyen d'un circuit de réglage, et
d) détermination de la grandeur de mesure électrochimique dans le circuit de mesure.

11. Procédé selon la revendication 10, **caractérisé en ce que** l'étape (d) est mise en oeuvre automatiquement dans un dispositif de commande (6).

12. Procédé selon l'une des revendications 10 et 11, **caractérisé en ce que** l'étape (d) comprend la détermination de la concentration ionique du liquide de mesure (2), du potentiel Redox du liquide de mesure (2) ou de l'impédance de l'électrode de mesure (3) et/ou de l'électrode de comparaison (4).

13. Procédé selon la revendication 12, **caractérisé en ce que** la mesure des impédances de l'électrode de mesure (3) et de l'électrode de comparaison (4) s'effectue par modulation d'un signal rectangulaire sur l'électrode de référence (5).

14. Procédé selon la revendication 12, **caractérisé en ce que** la mesure des impédances de l'électrode de mesure (3) et de l'électrode de comparaison (4) s'effectue par couplage capacitif d'un signal rectangulaire à l'électrode de mesure (3) et à l'électrode de comparaison (4).
